(19) Europäisches Patentamt
European Patent Office
Office européen des brevets

(11) EP 4 033 164 B1

(12) EUROPEAN PATENT SPECIFICATION

(45) Date of publication and mention of the grant of the patent:
**03.07.2024 Bulletin 2024/27**

(21) Application number: **22151729.5**

(22) Date of filing: **17.01.2022**

(51) International Patent Classification (IPC):
***F24D 19/10*** (2006.01) ***F24H 15/156*** (2022.01)
***F24H 15/219*** (2022.01) ***F24H 15/238*** (2022.01)
***F24H 15/36*** (2022.01) ***F24H 15/414*** (2022.01)
***F24H 15/429*** (2022.01)

(52) Cooperative Patent Classification (CPC):
**F24D 19/1009; F24H 15/156; F24H 15/219; F24H 15/238; F24H 15/36; F24H 15/414; F24H 15/429;** Y02B 30/00

(54) **DYNAMIC SELF-ADAPTATION METHOD OF THE IGNITION DELAY OF A BURNER OF A GAS BOILER OR SIMILAR**

DYNAMISCHES SELBSTANPASSUNGSVERFAHREN DER ZÜNDVERZÖGERUNG EINES BRENNERS EINES GASKESSELS ODER ÄHNLICHEM

PROCÉDÉ D’AUTO-ADAPTATION DYNAMIQUE DU RETARD A L’ALLUMAGE D’UN BRÛLEUR D’UNE CHAUDIÈRE À GAZ OU SIMILAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.01.2021 IT 202100001043**

(43) Date of publication of application:
**27.07.2022 Bulletin 2022/30**

(73) Proprietor: **ARISTON S.P.A.**
**60044 Fabriano (AN) (IT)**

(72) Inventors:
- **CENTURELLI, Lorenzo**
  **60044 Fabriano (AN) (IT)**
- **SILVESTRI, Giacomo**
  **60044 Fabriano (AN) (IT)**
- **CHIAVETTI, Flavio**
  **60044 Fabriano (AN) (IT)**

(74) Representative: **Premru, Rok**
**Mar.Bre S.R.L.,**
**2, Via San Filippo**
**60044 Fabriano (IT)**

(56) References cited:
**GB-A- 2 043 305**
**GB-A- 2 520 064**
**US-A- 3 170 630**
**US-A1- 2018 180 299**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

The object of the present invention is a dynamic self-adaptation method of the ignition delay of a burner of a gas boiler.

More in detail, the present invention relates to a dynamic self-adaptation method of the ignition delay of a burner of a condensing boiler or the like.

As known, the boiler ignition delay function has been introduced in order to limit/avoid the looping phenomenon, that is consecutive ignitions and switch offs of the boiler itself.

Currently said ignition delay is a fixed value, set by the manufacturer or by the installer of the boiler based on standard operating conditions.

Namely, such ignition delay does not account for either the characteristics of the heating system, e.g. the type and number of heating elements or the presence of choking elements; in general it does not account for the actual operating conditions in which the system works, said operating conditions being able to vary according to the ambient temperature set by the user or to the outer temperature or other.

Such solution, therefore, is not very effective in solving the phenomenon of cycles and is not very flexible in adapting to the characteristics of the heating system as the operating conditions thereof vary.

The object of the present invention is to obviate such kind of drawbacks, by providing a dynamic self-adaptation method of the ignition delay of a burner of a gas boiler or the like capable of strongly reducing the cycle phenomenon even in variable operating conditions and limiting the impacts on comfort.

A further object of the present invention, at least for one or more executive variants, is to provide a dynamic self-adaptation method of the ignition delay of a burner of a gas boiler or the like capable of taking into account the characteristics of the heating system and of the operating conditions in which it works from time to time.

A further object of the present invention, at least for one or more executive variants, is to provide a dynamic self-adaptation method of the ignition delay of a burner of a gas boiler or the like which may be easily implementable on boilers, burners or the like.

This and other objects, which shall appear clear hereinafter, are achieved with a dynamic self-adaptation method of the ignition delay of a burner of a gas boiler or the like according to the provisions of claim 1.

Other objects may also be achieved through the additional features of the dependent claims.

Further features of the present invention shall be better highlighted by the following description of a preferred embodiment, in accordance with the patent claims and illustrated in the enclosed designs. Such figures should be considered as having an illustrative and non-limiting purpose, in which:

- Fig. 1 shows a temperature-time chart wherein the delivery temperature trend Tm of a generic boiler is shown;
- Fig. 2 schematically shows a generic boiler cooperating with a generic heating system;
- Fig. 3 schematically shows a generic boiler cooperating with a generic choked heating system for the interception of zones and/or single heating elements.

The features of the dynamic self-adaptation method of the ignition delay of a burner of a gas boiler or the like according to the present invention are now described, using the references contained in the figures.

It should be noted that any dimensional and spatial term (such as "lower", "upper", "inner", "outer", "front", "rear", "vertical", "horizontal" and the like) possibly used below refers, unless otherwise indicated, to the position according to which the object of the invention represented in the drawings is arranged in operating conditions.

Before proceeding with the description of the invention and with reference to Figs. 1 and 2, it is useful to deepen the operation of a generic boiler 1, preferably a condensing boiler 1, cooperating with a generic heating system 2.

Hereinafter, the term water refers to any heat transfer fluid capable of circulating inside the heating system and of carrying heat from a heat source, such as a boiler 1, to a dispersing source, such as for example a heating element or radiator with reference to Figure 2 or 3.

A condensing boiler 1 will be considered here, by way of non-limiting example, hereinafter only referred to boiler 1 for simplicity of description, which may comprise at least one primary exchanger 10 associated with at least one burner for the generation of hot water for the heating, at least one control unit 11 of the boiler 1 also adapted to implement the methods according to the invention, at least one pump 14 for the circulation of water of the heating system, at least one sensor 15 sending a signal representative of the current value Qcm of the flow rate Qc circulating in the primary exchanger 10 or, alternatively, a set of sensors 15 adapted to provide a set of parameters sufficient to indirectly deduce therefrom the current value Qcm of the flow rate Qc itself.

Said sensors 15, may be wholly or partially integrated with said circulation pump 14.

In fact, there are circulating pumps 14 so-called SMART, equipped with means to indicate some characteristics of their operating status including the value of the current flow rate Qcm. For the purposes of the invention, the location of said sensors 15 makes no difference either if they directly provide the value of the current flow rate Qcm or data wherefrom such value may be calculated by the control unit 11, therefore, from here on it will be understood that said sensors 15 are able to provide the value of the current flow rate Qcm.

The boiler 1 generally also comprise at least one temperature sensor 12 to detect the delivery temperature Tm and at least one temperature sensor 13 to detect the return temperature Tr to the primary exchanger 10 with control and safety functions; however, the control of the return temperature Tr is not necessary for the purposes of the invention.

Nothing prevents said boiler 1 from being different from the condensing type and/or equipped with further components.

A generic heating system 2 is illustrated here, comprising at least one secondary exchanger Rs (either a radiator Rs or a heating element Rs); preferably a plurality of secondary exchangers Rs, where each secondary exchanger Rs may be choked or excluded, manually or automatically, according to the ambient temperature Ta by means of respective thermostatic valves Ev.

In the event that the system includes "n" radiators Rsn (Rs1, Rs2, ..., Rsn), each thermostatic valve Evn (Ev1, Ev2, ..., Evn) corresponds to each radiator.

Hereinafter, the term ignition time $t_{acc}$ is to be understood as the time elapsing between one ignition and the subsequent switch off of the boiler 1, that is, substantially the time in which the burner of the boiler is in operation, while the re-ignition time tri is meant as the time elapsing between a switch off of the burner and the subsequent re-ignition of the burner itself (see Fig. 1).

It should be noted that during a heat delivery, for example activated by a room thermostat that signals that the room temperature Ta is lower than the desired temperature, the boiler 1 delivers hot water to the heating system 2 at a delivery temperature Tm which is tendentially equal to a target temperature Ts that may normally be set by the user within an adjustment range.

Naturally, the target temperature Ts, that also depends on the type of radiators Rs, is at least that sufficient to bring the ambient temperature Ta to the desired value in the most adverse weather conditions.

Generally, when the delivery temperature Tm approaches the target value Ts, the boiler 1 modulates its power towards the minimum to identify and operate in an equilibrium situation (or at a regime) in which the heat flow rate of the delivered water corresponds as much as possible to the heat requirement of the system; when the delivery temperature Tm reaches the target value Ts the boiler 1 switches off.

After switching off, if the heat requirement still remains active, the boiler 1 keeps the circulation pump 14 running (post-circulation step) and remains ready to restart as soon as the delivery temperature Tm drops below a re-ignition temperature Tri lower than the value of the target temperature Ts.

As anticipated, the re-ignition time tri is the time elapsing between a boiler switch off, when the delivery temperature Tm has reached the target one Ts, and the subsequent re-ignition of the boiler 1, that is, when the delivery temperature Tm is equal to the re-ignition temperature Tri.

The ignition time $t_{acc}$ reduces in the conditions of low heat requirement of the system, that is,when the delivery temperature Tm of the boiler 1 reaches the switch off target temperature value Ts more quickly, leading to the aforementioned phenomenon of repeated ignitions and switch offs in a fast and sequential way also called cycles.

In these circumstances, the boiler 1 switches on and is immediately forced to modulate towards the minimum power because the delivery temperature Tm approaches too quickly to the target one Ts.

The high modulation ratios that characterise the new generations of boilers help to ensure that boiler 1 is able to deliver only the amount of heat necessary, but in order for boiler 1 to be able to modulate towards the minimum power, without switching off, it is necessary that this happens very quickly.

In reality, the new generation condensing boilers are characterised by a high thermal inertia which is accompanied by a slow modulation towards the minimum, often linked to the need of avoiding flame lift-offs and noises, especially during the ignition step.

Such boilers, therefore, although equipped with modulation ratios greater than those of old generation conventional non-condensing boilers, are in fact more affected by the problem due to excessive cycles.

The slowness of modulation of the condensing boilers, after re-ignition, is mainly linked to the ignition dynamics of the premix burners that normally require an ignition power value close to the average value between maximum and minimum deliverable power and a minimum stabilization time of the flame at said average power, before modulation may be started towards the minimum. Furthermore, the modulation may not take place instantaneously but must follow a decreasing power ramp ($-\Delta W$/sec which may also be expressed as $-\Delta\omega$/second where $\omega$ is the number of revolutions/sec of the fan, which is the actuator that drives the power delivery proportionally to its revolution speed $\omega$).

A too steep ramp or too fast modulation may lead to flame lift-offs and combustion noise.

It may therefore happen that the temperature of the heat transfer fluid reaches the target temperature Ts before the boiler 1 reaches the minimum power (essentially the boiler 1 delivers more heat than actually needed); this involves the switch off of the boiler 1 itself as there is no need to heat.

In these circumstances, a cycle of repeated switch on and offs (cycle) of the boiler 1 is triggered, resulting in a non-optimised operation that does not fully use the potentialities of the condensing boiler 1 in terms of modulation ratio, energy efficiency and consequently of potential fuel savings.

Moreover, although the new generation boilers are characterised by low ignition noise, the switch on/off cycle, may have an impact on the acoustic comfort of installation and/or user environment.

Basically, the phenomenon of cycling reduces the energy performance of the boiler 1, which does not have sufficient time to modulate towards lower powers due to the rapid achievement of the conditions that involve the shutdown, and increase the noise thereof.

To reduce the number of switch on and off cycles, the function of a pre-set ignition delay t.R.imp is used, that is, a fixed pre-set time is provided that prevents the boiler 1 from re-igniting immediately as soon as the delivery temperature Tm, by decreasing, reaches and exceeds the re-ignition temperature Tri.

Basically, the pre-set ignition delay time t.R.imp is a pre-set minimum value of the re-ignition time and may be optimised based on the expected maximum value (Qrif) of the circulation flow rate Qc when none of said radiators Rs (Rs1, Rs2, ..., Rsn) is choked.

In the state of the art, the pre-set ignition delay t.R.imp is a parameter that may be set:

- manually by the installer 1 of the boiler 1 according to the characteristics of the heating system;
- automatically by the boiler 1 which selects the pre-set delay value t.R.imp according to the target temperature value Ts set by the user.

Other solutions provide for a hybrid procedure in which each value of a manually settable parameter corresponds to an allowed interval, within which the pre-set ignition delay t.R.imp varies according to the target delivery temperature Ts set by the user.

In short, it is basically a mapping (table) whereby a re-ignition delay value t.R.imp corresponds to a value of the parameter that may be manually set and to each value of the set target delivery temperature Ts corresponds to a re-ignition delay value t.R.imp:

| | | Manually settable parameter | | | | |
|---|---|---|---|---|---|---|
| | | 1 | 2 | 3 | … | n |
| Target delivery temperature Ts [°C] set by the user | 30 | *t.R.imp(1,30)* | *t.R.imp(2,30)* | *t.R.imp(3,30)* | … | *t.R.imp (n,30)* |
| | … | … | … | … | … | … |
| | … | … | … | … | … | … |
| | … | … | … | … | … | … |
| | 80 | *t.R.imp(1,80)* | *t.R.imp(2,80)* | *t.R.imp(3,80)* | … | *t.R.imp(n,80)* |

Currently, therefore, the pre-set ignition delay t.R.imp is a substantially default parameter that does not take into account the variations in use of the system configuration and does not dynamically adapt to them.

Some solutions consider the value of the delivery and return temperature to define a generic delay.

For example, document GB2520064A illustrates a boiler equipped with a controller, connected with temperature sensors of the heat transfer fluid delivery and return, capable of controlling the ignition of the burner and to delay the ignition of the same.

The duration of such delay depends on the ratio between the delivery temperature and the return temperatures with respect to the previously stored values.

However, such possible solution does not fully resolve the cycle phenomenon and is unable to take into account the choke of the heating system.

In general, when a heating system is choked, due to the interception of zones or variation of the incoming flow for single radiators, essentially two concurrent effects occur:

- the reduction of the flow rate of the circulating heat transfer fluid Qc due to the increase in pressure drops: it means a lower heat capacity;
- the reduction of the system heat requirement Wi, that is the amount of heat that the heating system is able to exchange and dispose of: it means lower losses due to dispersion.

Both effects contribute to the reduction of the system response time.

Fig. 3 shows the heating system 2 in a possible choking condition, where the radiators Rs1 and Rs2 are choked by the respective valves Ev1 and Ev2 and do not emit heat, while the radiator Rn does not undergo any choke and disposes of the heat Wi.

The reduction of the circulating flow rate Qc implies that, at a given power Wu delivered by the boiler 1 linked to said ignition dynamics, the difference between the delivery temperature Tm and the return temperature Tr increases:

$$\text{Wu being} = \text{to } Qc \bullet cp \bullet (Tm - Tr)$$

where cp is the specific heat or the specific heat capacity.

The increase in the temperature difference between delivery Tm and return Tr heat implies a greater increase in the delivery temperature Tm and consequently a faster reach of the switch off target temperature Ts.

The reduction of the heat requirement of the system to the power Wi, that is the reduction of the amount of heat exchanged, implies that, at a given power delivered by the boiler 1 Wu linked to the said ignition dynamics, a proportional increase in the return temperature Tr occurs and therefore in the delivery temperature Tm and consequently a faster reach of the switch off target temperature Ts.

In practice, the reduction of the heat requirement of the system to the power Wi, means that, at the same power delivered by the boiler 1 Wu, the delivery temperature Tm increases and consequently the switch off target temperature Ts is reached first; the practical effect observed is a reduction in the ignition time $t_{acc}$.

In these conditions, the pre-set ignition delay t.R.imp is not sufficient to avoid or limit the cycle as, being it a fixed parameter, it is not able to adapt to the different chokes with which the heating system and consequently the boiler 1 may work.

The invention describes a self-adaptation method which optimally varies the stabilization component of the control system, consisting for example of a pre-set ignition delay t.R.imp, for a heat-transfer fluid heating system with individually choked radiators and sensor on the fluid delivery temperature Tm. The dynamic self-adaptation method of the ignition delay according to the present invention, hereinafter called delay method for convenience of description, may be installed and implemented on a boiler 1 which comprises at least one primary exchanger 10 for the generation of hot water for heating; at least one control unit 11; at least one temperature sensor 12 to detect the delivery temperature Tm and at least one pump 14 for the circulation of water of the heating system, an assembly of one or more sensors 15 for measuring the flow rate Qc of the primary exchanger 10 of the boiler 1, said assembly of one or more sensors 15 being able to be at least partially integrated with said circulation pump 14.

The ignition delay self-adaptation method according to the present invention is characterised by the fact of calculating a dynamic delay t.R.dyn, that is variable, which takes into account the choking conditions of the heating system.

Said dynamic delay t.R.dyn replaces the pre-set ignition delay t.R.imp so as to identify an optimal delay value as the system conditions vary.

The choke of the system, or the opening/closing degree of the thermostatic valves Ev, has an effect on the return temperatures Tr and therefore with the same power output Wu by the boiler 1 causes, as mentioned, an increase in the delivery temperature Tm.

By checking the return Tr and delivery Tm temperatures by the power delivered Wu by the boiler 1 (deductible as mentioned by the fan speed $\omega$) it would be possible to identify the operating conditions and therefore to determine the optimal ignition delay time.

However, rather than from an analysis of the variations of the temperatures or of the ratio between the power delivered by the boiler 1 Wu and said temperatures, it has been found particularly effective and advantageous to set an adaptive control according to the circulation flow rate Qc and preferably also taking into account the pre-set delay time t.R.imp.

In fact, the value of the circulation flow rate Qc allows to better evaluate the conditions of the heating system and the choking degree with which it operates; this enables to implement a more precise and timely adaptive control and to significantly reduce the cycle phenomenon.

Such evaluation may not be implemented so precisely by the control of the delivery and return temperatures, as the value of said temperatures is not strongly representative of the choking degree of the heating system.

During the post-circulation step, wherein the ignition delay advantageously operates, the circulation pump 14 is in operation and the value of the circulation flow rate Q monitored.

According to a preferred variant of the invention, a dynamic ignition delay t.R.dyn may be imposed by adding an increasing value to the pre-set ignition delay t.R.imp as the circulation flow rate Qc of the fluid decreases.

This occurs automatically through the control unit 11, which knows the current value Qcm of the circulation flow rate Qc measured thanks to said set of sensors 15.

Basically, the value of the system circulation flow rate Qc depends on the operating conditions of the system and the choke of the valves Evn that control the respective radiators Rsn.

The method of the ignition delay therefore adapts the ignition delay according to the variations in the configuration of the heating system, said variations being determined by the measuring and monitoring of the value of the circulation flow rate Qc of the heat transfer fluid in the heating system.

Here ΔQc indicates the reduction of the circulation flow rate of the system expressed by the adimensional relationship:

$$\Delta Qc = (Qrif - Qcm) / Qrif$$

where:

- Qrif is a maximum reference flow rate detected and stored in the conditions of minimum load loss of the heating system 2, that is with all the valves Ev1, Ev2, Evn of the system 2 open;
- Qcm is the current value of the flow rate Qc detected through the sensor assembly 15 always ≤ Qrif;

and where, therefore, ΔQc ≥ 0.

When the heating system 2 is choked by the interception of zones and/or single radiators Rsn, the method increases the ignition delay by replacing the pre-set delay t.R.imp with a dynamic delay t.R.dyn function of t.R.imp and ΔQc and calculated according to the following general conditions:

$$t.R.dyn = f(t.R.imp, \Delta Qc) \qquad (1)$$

with

t.R.dyn = t.R.imp when ΔQc = 0
t.R.dyn > t.R.imp when ΔQc > 0
t.R.dyn is increasing with increasing ΔQc.

The following expression is included in the general relation (1)

$$t.R.dyn = t.R.imp + f(\Delta Qc) \qquad (2)$$

According to a very simple variant which has been found to be effective, the total delay t.R.dyn according to the present invention may be defined and calculated as follows:

$$t.R.dyn = t.R.imp + K^* \Delta Qc \qquad (3)$$

where K is a proportionality coefficient that may be set empirically according to the characteristics of the boiler 1 and of the heating system 2.

Basically, when all the thermostatic valves Ev1, Ev2, Evn are open or more generally there are no intercepted/choked radiators Rs1, Rs2, Rsn, the flow rate value Qc measured by the flow rate sensors 15 corresponds to the reference one Qrif and therefore the pre-set delay t.R.imp applies.

On the other hand, if the thermostatic valves Ev1, Ev2, Evn start to trigger, the radiators Rs1, Rs2, Rsn are progressively choked/excluded and the delay method according to the present invention triggers which limits the cycles that would otherwise trigger.

In the embodiment variant expressed by relation (3), the increase in the ignition delay with respect to the pre-set t.R.imp is proportional to the reduction of the circulation flow rate, however nothing prevents from providing for, in accordance with the particular operating requirements of the boiler 1 or specific types of applications, non-proportional increases as expressed in the most general relations (1) and (2).

In accordance with a possible embodiment variant, the delay method may be integrated by a supplementary method adapted to guarantee the comfort in any situation.

Advantageously, it is possible to force the ignition and to interrupt the total ignition delay t.R.dyn when certain operating conditions occur.

This may be useful, for example, when the delivery temperature Tm, following the switch off of the boiler 1, undergoes a predefined reduction ΔTmax with respect to the target temperature Ts, where ΔTmax could be set via a control panel by the manufacturer, by the installer and/or by the user.

In such case, when, following the switch off of boiler 1, the delivery temperature Tm should drop/decrease by an amount equal to ΔTmax, the control unit 11 forces the ignition by interrupting the calculated delay t.R.dyn and re-ignites the boiler 1 in order to avoid an excessive cooling of the radiators Rs1, Rs2, Rsn. The value of ΔTmax, for example, may be adjusted according to the type of radiators Rs1, Rs2, Rsn, in a default temperature range according to the target temperature Ts.

Alternatively or in addition to such mode of interruption of the calculated delay t.R.dyn, it is possible to provide that the additional method of interruption of the calculated delay t.R.dyn may consider the value of the flow rate of the heat transfer fluid.

For example, it is possible to interrupt the ignition delay t.R.dyn when ΔQc tends to zero.

When the radiators are reached by a flow rate of heat transfer fluid substantially close to the reference one, that is valves Ev1 ... Evn all open, the control unit 11 interrupts the ignition delay t.R.dyn and re-ignites the boiler 1 to avoid an excessive cooling of the heating elements.

Naturally, all the possible circumstances in which it is useful to interrupt the calculated delay mode t.R.dyn should be suitably activated after the pre-set ignition delay time t.R.imp has elapsed.

In other words, any circumstance identifiable by the control unit 11 with the sensors with which it may be equipped, that makes it appropriate the interruption of the calculated delay mode t.R.dyn, takes back to the pre-set delay mode t.R.imp.

The dynamic self-adaptation method of the ignition delay of a burner of a gas boiler 1 or the like according to the present invention, therefore, allows to reduce/limit the choke phenomenon.

The dynamic self-adaptation method of the ignition delay according to the present invention considers the control and monitoring of the flow rate of the heat transfer fluid, said parameter being closely related to the operating conditions of the heating system and to the number of more or less choked radiators.

In this way, the dynamic self-adaptation method of the delay is able to establish, instant by instant, the extent of the increase in the delay necessary to avoid the cycle of the boiler 1 as a function of the set and detected temperature values and on the basis of the value of the flow rate of the heat transfer fluid.

The logic underlying the dynamic self-adaptation method of the ignition delay according to the present invention may be installed on any boiler 1, preferably a condensing boiler 1, equipped with at least one control unit and at least one flow rate sensor.

It is clear that several variants of the invention described above are possible for the man skilled in the art, without departing from the scope of the invention as defined by the claims, as well as it is clear that in the practical embodiment of the invention the various components described above may be replaced with technically equivalent elements.

## Claims

1. Dynamic self-adaptation method of the ignition delay of a burner that may be installed and implemented on a gas boiler (1) comprising at least one primary exchanger (10) for the generation of hot water for a heating system (2) equipped with at least one secondary exchanger (Rs1, Rs2, ..., Rsn), at least one control unit (11), at least one temperature sensor (12) to detect the delivery temperature (Tm), at least one pump (14) for the circulation of water of the said heating system (2), at least one assembly of one or more sensors (15) configured to determine a the value (Qcm) of a circulation flow rate (Qc) in the primary exchanger (10) of the said boiler (1), where said control unit (11) is configured to re-ignite said boiler (1) with a pre-set ignition delay (tRimp) optimized for the maximum expected value (Qref) of said circulation flow rate (Qc) when none of said at least one secondary exchanger (Rs1, Rs2, ..., Rsn) is choked,
wherein
said pre-set ignition delay (t.R.imp) is replaced by a dynamic ignition delay (t.R.dyn) calculated by said control unit (11) as a function of the choking conditions of said at least one secondary exchanger (Rs1, Rs2, ..., Rsn), said choking conditions being determined by measuring and monitoring of the value (Qcm) of said circulation flow rate (Qc).

2. Method, according to the previous claim, wherein

    - said dynamic ignition delay (t.R.dyn) is a function of said pre-set ignition delay (t.R.imp) and of the reduction (ΔQc) of said circulation flow rate (Qc),
    - said function of said ignition delay is of the type:

$$t.R.dyn = f(t.R.imp, \Delta Qc)$$

where

t.R.dyn = t.R.imp.when $\Delta$Qc = 0
t.R.dyn > t.R.imp when $\Delta$Qc > 0
t.R.dyn is increasing with increasing $\Delta$Qc
and where

$$\Delta Qc = (Qrif - Qcm) / Qrif,$$

where:

- Qrif is a maximum reference flow rate detected and stored in the conditions of minimum load loss of said heating system (2);
- Qcm is the current value of the flow rate (Qc) detected through said sensor assembly (15).

**3.** Method according to the previous claim, wherein said dynamic ignition delay (t.R.dyn) takes the particular form:

$$t.R.dyn = t.R.imp. + K^* \Delta Qc$$

where:

- K is a proportionality coefficient that may be set experimentally as a function of the characteristics of said boiler (1) and of said heating system (2).

**4.** Method according to one or more of the previous claims, providing for an additional method step of interrupting said dynamic ignition delay (t.R.dyn) when any circumstance identifiable by the control unit (11) makes it appropriate to interrupt said dynamic ignition delay (t.R.dyn).

**5.** Method according to the previous claim, wherein said interruption of the dynamic ignition delay (t.R.dyn), returns to the pre-set ignition delay (t.R.imp) after a pre-set ignition delay time has elapsed.

## Patentansprüche

**1.** Verfahren zur dynamischen Selbstanpassung der Zündverzögerung eines Brenners, der an einem Gaskessel (1) installiert und implementiert werden kann, umfassend mindestens einen Primärtauscher (10) zur Erzeugung von Warmwasser für ein Heizsystem (2), das mit mindestens einem Sekundäraustauscher (Rs1, Rs2, ..., Rsn) ausgestattet ist, mindestens eine Steuereinheit (11), mindestens einen Temperatursensor (12) zur Erfassung der Abgabetemperatur (Tm), mindestens eine Pumpe (14) für die Wasserzirkulation des Heizsystems (2), mindestens eine Anordnung aus einem oder mehreren Sensoren (15), die dafür ausgebildet sind, einen Wert (Qcm) einer Durchflussrate der Zirkulation (Qc) in dem Primäraustauscher (10) des Kessels (1) zu bestimmen, wobei die Steuereinheit (11) dafür ausgebildet ist, den Kessel (1) mit einer voreingestellten Zündverzögerung (tRimp) erneut zu zünden, die für den maximal erwarteten Wert (Qref) der Durchflussrate der Zirkulation (Qc) optimiert ist, wenn keiner der mindestens einen Sekundäraustauscher (Rs1, Rs2, ..., Rsn) gedrosselt ist,
wobei
die voreingestellte Zündverzögerung (t.R.imp) durch eine dynamische Zündverzögerung (t.R.dyn) ersetzt wird, die von der Steuereinheit (11) in Abhängigkeit von den Drosselbedingungen des mindestens einen sekundären Wärmetauschers (Rs1, Rs2, ..., Rsn) ) berechnet wird, wobei die Drosselbedingungen durch Messen und Überwachen des Wertes (Qcm) der Durchflussrate der Zirkulation (Qc) bestimmt werden.

**2.** Verfahren nach dem vorhergehenden Anspruch, wobei

- die dynamische Zündverzögerung (t.R.dyn) eine Funktion der voreingestellten Zündverzögerung (t.R.imp)

und der Reduzierung ($\Delta Qc$) der Durchflussrate der Zirkulation (Qc) ist,
- die Funktion der Zündverzögerung von der Art ist:

$$t.R.dyn = f(t.R.imp, \Delta Qc)$$

wobei

t.R.dyn = t.R.imp. wenn $\Delta Qc = 0$
t.R.dyn > t.R.imp wenn $\Delta Qc > 0$
t.R.dyn mit zunehmender $\Delta Qc$ zunimmt
und wobei

$$\Delta Qc = (Qrif - Qcm) / Qrif,$$

wobei:

- Qrif eine maximale Referenzdurchflussrate ist, die unter den Bedingungen eines minimalen Lastverlusts des Heizsystems (2) erfasst und gespeichert wird;
- Qcm der aktuelle Wert der Durchflussrate (Qc) ist, der durch die Sensoranordnung (15) erfasst wird.

**3.** Verfahren nach dem vorhergehenden Anspruch, wobei die dynamische Zündverzögerung (t.R.dyn) die besondere Form annimmt:

$$t.R.dyn = t.R.imp. + K^* \Delta Qc$$

wobei:

- K ein Proportionalitätskoeffizient ist, der experimentell in Abhängigkeit von den Eigenschaften des Kessels (1) und des Heizsystems (2) eingestellt werden kann.

**4.** Verfahren nach einem oder mehreren der vorherigen Ansprüche, das einen zusätzlichen Verfahrensschritt zum Unterbrechen der dynamischen Zündverzögerung (t.R.dyn) vorsieht, wenn ein Umstand, der von der Steuereinheit (11) erkennbar ist, es angemessen macht, die dynamische Zündverzögerung (t.R.dyn) zu unterbrechen.

**5.** Verfahren nach dem vorhergehenden Anspruch,
wobei
die Unterbrechung der dynamischen Zündverzögerung (t.R.dyn) nach Ablauf einer voreingestellten Zündverzögerungszeit zur voreingestellten Zündverzögerung (t.R.imp) zurückkehrt.

## Revendications

**1.** Procédé d'auto-adaptation dynamique du délai d'allumage d'un brûleur pouvant être installé et mis en oeuvre sur une chaudière à gaz (1) comprenant au moins un échangeur primaire (10) pour la production d'eau chaude pour un système de chauffage (2) équipé d'au moins un échangeur secondaire (Rs1, Rs2, ...., Rsn), au moins une unité de contrôle (11), au moins un capteur de température (12) pour détecter la température de livraison (Tm), au moins une pompe (14) pour la circulation de l'eau dudit système de chauffage (2), au moins un ensemble d'un ou plusieurs capteurs (15) configuré pour déterminer une valeur (Qcm) d'un débit de circulation (Qc) dans l'échangeur primaire (10) de ladite chaudière (1), où ladite unité de contrôle (11) est configurée pour rallumer ladite chaudière (1) avec un délai d'allumage prédéfini (tRimp) optimisé pour la valeur maximale attendue (Qref) dudit débit de circulation (Qc) lorsqu'aucun dudit au moins un échangeur secondaire (Rs1, Rs2, ..., Rsn) n'est étranglé,
dans lequel
ledit délai d'allumage préréglé (t.R.imp) est remplacé par un délai d'allumage dynamique (t.R.dyn) calculé par ladite unité de contrôle (11) en fonction des conditions d'étouffement dudit au moins un échangeur secondaire (Rs1, Rs2, ..., Rsn), lesdites conditions d'étouffement étant déterminées par la mesure et la surveillance de la valeur (Qcm) dudit débit de circulation (Qc).

**2.** Procédé selon la revendication précédente, dans lequel

- ledit délai d'allumage dynamique (t.R.dyn) est fonction dudit délai d'allumage préréglé (t.R.imp) et de la réduction (ΔQc) dudit débit de circulation (Qc),
- ladite fonction dudit délai d'allumage est du type :

$$t.R.dyn = f(t.R.imp, \Delta Qc)$$

où

t.R.dyn = t.R.imp. lorsque ΔQc = 0
t.R.dyn > t.R.imp lorsque ΔQc > 0
t.R.dyn augmente avec l'augmentation de ΔQc
et où

$$\Delta Qc = (Qrif - Qcm) / Qrif,$$

où :

- Qrif est un débit de référence maximal détecté et stocké dans les conditions de perte de charge minimale dudit système de chauffage (2) ;
- Qcm est la valeur actuelle du débit (Qc) détecté par ledit ensemble de capteurs (15).

**3.** Procédé selon la revendication précédente, dans lequel ledit délai d'allumage dynamique (t.R.dyn) prend la forme particulière :

$$t.R.dyn = t.R.imp. + K^* \Delta Qc$$

où :

- K est un coefficient de proportionnalité qui peut être fixé expérimentalement en fonction des caractéristiques de ladite chaudière (1) et dudit système de chauffage (2).

**4.** Procédé selon l'une ou plusieurs des revendications précédentes, prévoyant une étape supplémentaire d'interruption dudit délai d'allumage dynamique (t.R.dyn) lorsqu'une circonstance identifiable par l'unité de contrôle (11) rend appropriée l'interruption dudit délai d'allumage dynamique (t.R.dyn).

**5.** Procédé selon la revendication précédente
dans lequel
cette interruption du délai d'allumage dynamique (t.R.dyn) permet de revenir au délai d'allumage préréglé (t.R.imp) après l'écoulement d'un délai d'allumage préréglé.

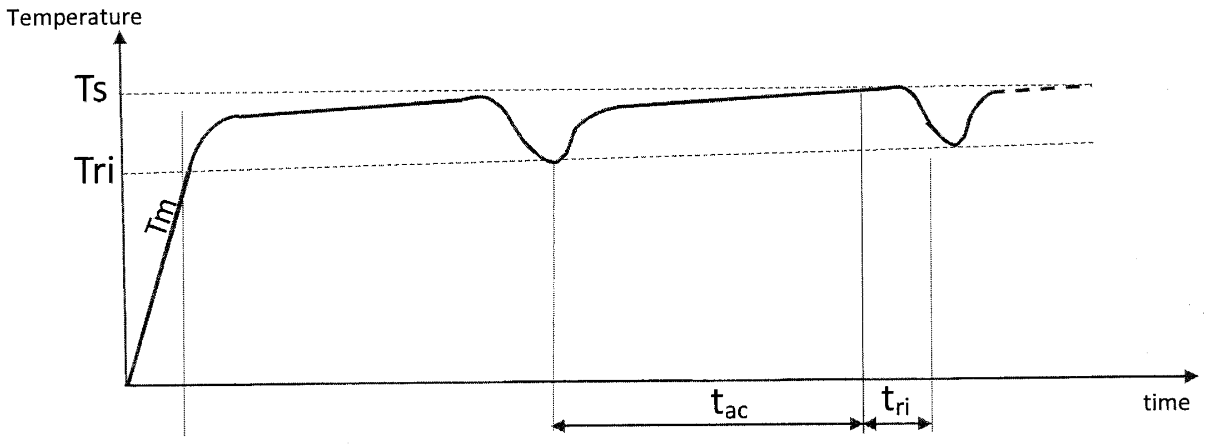
Temperature
Ts
Tri
Tm
$t_{ac}$
$t_{ri}$
time

Fig. 1

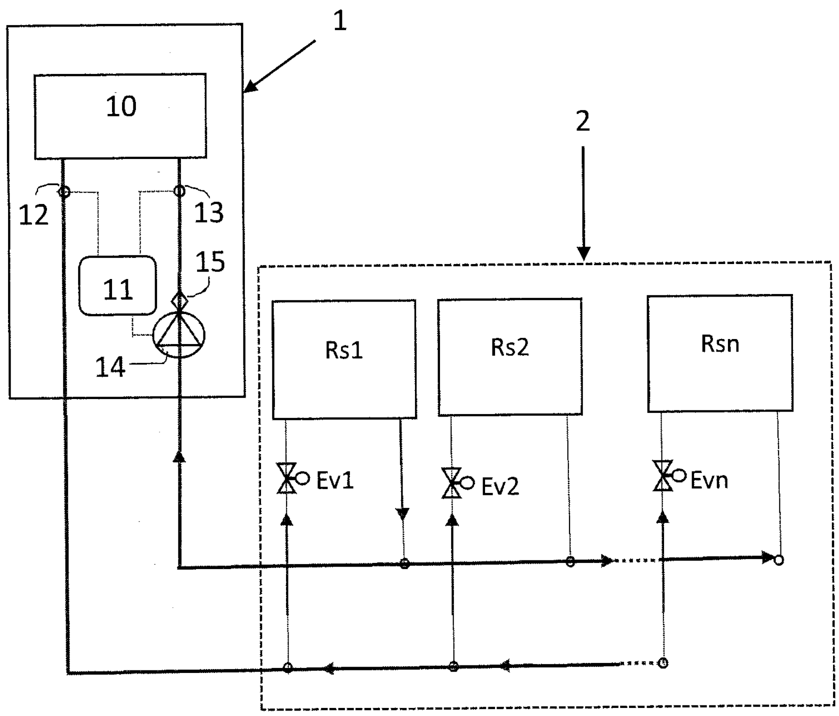
1
2
10
12
13
11
15
14
Rs1
Rs2
Rsn
Ev1
Ev2
Evn

Fig. 2

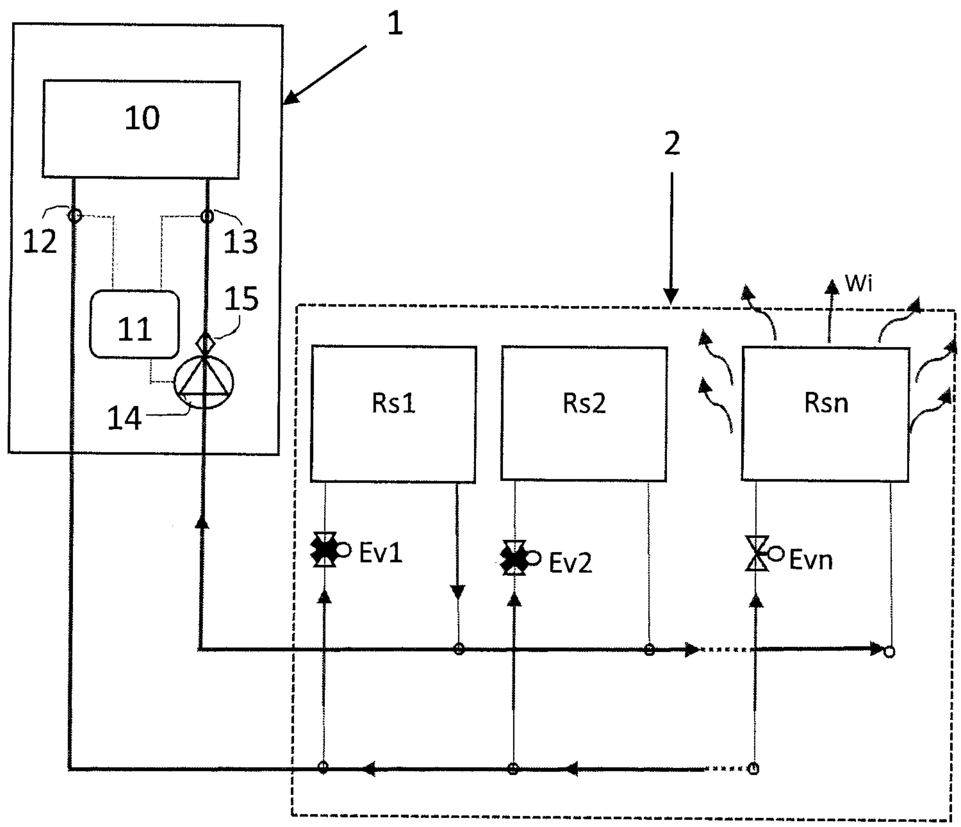


Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- GB 2520064 A